# EUROPÄISCHE PATENTSCHRIFT

(11) **EP 3 055 120 B1**
(45) Veröffentlichungstag und Bekanntmachung des Hinweises auf die Patenterteilung: **03.07.2019**
(21) Anmeldenummer: 15712525.3
(22) Anmeldetag: 16.03.2015
(51) Int. Cl.: B29C 49/46, B29C 49/12, B29C 49/06, B29C 49/36, B29C 49/64, B29K 67/00, B29C 49/18, B29L 31/00, B65B 3/02

(54) **VERFAHREN UND VORRICHTUNG ZUM HERSTELLEN EINES MIT FÜLLGUT GEFÜLLTEN BEHÄLTERS**
METHOD AND DEVICE FOR PRODUCING A CONTAINER FILLED WITH FILLING MEDIUM
PROCÉDÉ ET DISPOSITIF POUR LA PRODUCTION D'UN RÉCIPIENT REMPLI DE MATIÈRE DE REMPLISSAGE

(30) Priorität: 27.03.2014 DE 102014004354
(43) Veröffentlichungstag der Anmeldung: 17.08.2016
(73) Patentinhaber: KHS Corpoplast GmbH, 22145 Hamburg (DE)
(72) Erfinder: LINKE, Michael, 22159 Hamburg (DE); BAUMGARTE, Rolf, 22926 Ahrensburg (DE); LITZENBERG, Michael, 21039 Börnsen (DE)
(74) Vertreter: Hausfeld, Norbert
(86) Internationale Anmeldenummer: PCT/EP2015/000574
(87) Internationale Veröffentlichungsnummer: WO 2015/144295

(56) Entgegenhaltungen:
- US-A1- 2006 097 417
- US-A1- 2011 135 778
- US-A1- 2013 113 143
- US-A1- 2013 122 136

## Beschreibung

Die Erfindung betrifft ein Verfahren zum Herstellen eines mit einem flüssigen Füllgut gefüllten Behälters, bei dem ein Vorformling aus einem thermoplastischen Material nach einem thermischen Konditionieren mittels einer Reckstange gereckt und in einem Aufblasprozess in den Behälter umgeformt wird, wobei der Aufblasprozess umfasst eine Vorblasphase, in der ein Fluid eines ersten Druckniveaus zum Aufblasen verwendet wird, und eine Hauptblasphase, in der ein Fluid eines zweiten Druckniveaus, das höher ist als das erste Druckniveau, zum Aufblasen verwendet wird.

Die Erfindung betrifft ferner eine Einrichtung zur Herstellung eines mit einem flüssigen Füllgut gefüllten Behälters umfassend eine Heizvorrichtung zur thermischen Konditionierung von Vorformlingen aus einem thermoplastischen Material, und umfassend eine Blasvorrichtung zum Umformen jeweils eines thermisch konditionierten Vorformlings in einen Behälter, wobei die Blasvorrichtung eine Blasform zur Aufnahme eines Vorformlings, eine Reckstange zum Recken des in der Blasform befindlichen Vorformlings sowie Zuführmittel zum Einleiten von Blasfluiden in einen inneren Hohlraum des in der Blasform befindlichen Vorformlings aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird.

Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einbringung der unter Druck stehenden Luft umfasst auch die Drucklufteinleitung in die sich entwickelnde Behälterblase sowie die Drucklufteinleitung in den Vorformling zu Beginn des Blasvorganges.

Als vorteilhaft hat es sich erwiesen, den Blasvorgang in mehrere Phasen zu unterteilen. Beispielsweise ist bekannt, den Blasvorgang in eine Vorblasphase mit einem niedrigeren Druckniveau der Druckluft und in eine Hauptblasphase mit einem höheren Druckniveau der Druckluft zu unterteilen.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Weitere bekannte Verfahren und Vorrichtungen zum Herstellen eines mit einem flüssigen Füllgut gefüllten Behälters sind in den Dokumenten US2013/122136A1, US2013/113143A1 und US2011/135778A1 beschrieben.

Gemäß einem typischen Verarbeitungsverfahren werden die wie vorstehend hergestellten blasgeformten Behälter einer nachfolgenden Fülleinrichtung zugeführt und hier mit dem vorgesehenen Produkt abgefüllt. In der Regel werden somit eine separate Blasmaschine und eine separate Füllmaschine verwendet. Bekannt ist es ebenfalls bereits, eine separate Blasmaschine und eine separate Füllmaschine unmittelbar miteinander zu koppeln und eine sogenannte verblockte Blas-Füll-Einrichtung bereitzustellen.

Aufgrund der zwei separaten Maschinen ergeben sich für entsprechende Anlagen ein relativ großer Platzbedarf und eine relativ lange Prozesszeit, die sich zusammensetzt aus der Dauer des Blasprozesses, der Dauer des Füllprozesses sowie Transferzeiten zwischen den einzelnen bzw. verblockten Maschinen.

Ein alternativer bekannter Ansatz beruht darauf, die Formung der Behälter durch das abzufüllende Produkt selbst vorzunehmen. Ein entsprechend temperierter Vorformling wird hierzu in eine geeignete Form eingesetzt und anschließend wird das flüssige Produkt in den Vorformling sowie in die sich aus diesem Vorformling entwickelnde Behälterblase eingeleitet. Die Behälterblase wird hierbei solange aufgeweitet, bis eine vollständige Anlage an der Innenkontur der Form erreicht und der Behälter gefüllt ist. Ein derartiges Verfahren wird auch als hydraulisches Formungsverfahren bezeichnet. Bei einer Behälterformung durch das Füllmedium selbst wird lediglich nur noch eine Maschine benötigt, die dafür allerdings eine erhöhte Komplexität aufweist. Außerdem ist es bei einem Blasprozess mit einer Flüssigkeit schwierig, kontrollierte und reproduzierbare Bedingungen zu schaffen, insbesondere weil die Vorformlingsoberfläche bei Kontakt mit der Flüssigkeit abkühlt. Entsprechend ist es bisher nicht zufriedenstellend gelungen, eine beliebige gewünschte Materialverteilung in den Wandungen der fertigen Behälter zu erreichen.

Ausgehend von diesem Stand der Technik ist es eine Aufgabe der Erfindung, ein alternatives Verfahren zur Herstellung von mit flüssigem Füllgut gefüllten Behältern bereitzustellen, wobei insbesondere die genannten Nachteile bekannter Lösungen verringert werden sollen.

Diese Aufgabe wird gelöst durch ein Verfahren nach Anspruch 1 und eine Vorrichtung nach Anspruch 5. Vorteilhafte Ausführungsformen und Weiterbildungen sind Gegenstand der Unteransprüche. Ein wesentlicher Vorteil der Erfindung besteht darin, dass die Vorblasphase mit einem Blasgas erfolgt, so dass kaum Abkühlung des Vorformlingsmaterials bei Kontakt mit dem Blasfluid erfolgt. Dadurch wird während der Vorblasphase eine gezielt beeinflussbare Materialverteilung des Vorformlingsmaterials, insbesondere entlang einer Längsachse des Vorformlings, die der Richtung des in der Vorblasphase umfassten Reckvorgangs entspricht, erreicht. Ein weiterer Vorteil der Erfindung ist es, dass die Vorblasphase auf sehr gut verstandenen Prozessen und langjähriger Erfahrung beruht.

Ein weiterer Vorteil der Erfindung besteht darin, dass in der Hauptblasphase eine schnelle Abkühlung des Behälters durch das flüssige Füllgut erreicht wird, wodurch im Vergleich zu herkömmlichen Blasverfahren, bei denen die Abkühlung über Andrücken des Behälters an die kalte Blasform erfolgt, eine wesentlich effizientere Kühlung und dadurch eine Verkürzung der Hauptblasphase erreicht wird. Zudem entfallen Transferzeit zu einem separaten Füller und die Füllzeit.

Ein weiterer Vorteil der Erfindung besteht darin, dass lediglich für die Vorblasphase eine Druckgasversorgung mit mittleren Drücken erforderlich ist, während die konstruktiv aufwendige und daher teure Versorgung mit Hochdruckluft, wie sie in herkömmlichen Gasblasprozessen erforderlich ist, entfällt.

Insgesamt wird durch die Erfindung die Prozesszeit gegenüber Standardblasverfahren mit Blasgas und separatem Füllen wesentlich verkürzt, wobei gegenüber bekannten Flüssigblasverfahren eine wesentlich bessere Prozesskontrolle, insbesondere eine wesentlich verbesserte Materialverteilung, erreicht wird.

Das Blasgas wird beispielsweise durch einen Spalt im Bereich eines Mündungsabschnitts des Vorformlings bzw. der sich entwickelnden Behälterblase und/oder einen inneren Hohlraum der Reckstange in einen inneren Hohlraum des Vorformlings bzw. der sich entwickelnden Behälterblase eingeleitet.

Dieser Spalt ist beispielsweise ein die Reckstange umgebender Ringspalt oder ein flächiger Spalt, der sich bei Zurückziehen der Reckstange im Bereich des Mündungsabschnitts des Vorformlings bzw. der sich entwickelnden Behälterblase bzw. des fertigen Behälters ergibt.

Der Mündungsabschnitt ist dabei insbesondere der Bereich eines Vorformlings, der bei der Behälterherstellung nicht verformt ist. Insbesondere entspricht der Mündungsabschnitt des Vorformlings somit dem Mündungsabschnitt der sich aus dem Vorformling entwickelnden Behälterblase und dem Mündungsabschnitt des aus der Behälterblase erhaltenen fertigen Behälters.

Das Füllgut wird beispielsweise durch einen Spalt im Bereich eines Mündungsabschnitts des Vorformlings bzw. der sich entwickelnden Behälterblase und/oder einen inneren Hohlraum der Reckstange in einen inneren Hohlraum des Vorformlings bzw. der sich entwickelnden Behälterblase eingeleitet.

Wenn Blasgas und Füllgut über getrennte Einleitwege, beispielsweise Blasgas über den Spalt und Füllgut über die hohle Reckstange oder umgekehrt, eingeleitet werden, bedarf es vorteilhafterweise keiner Leitungen oder Leitungsabschnitte, die wechselnd von beiden Fluiden durchströmt werden.

Wenn ein Fluid über beide Einleitwege gleichzeitig eingeleitet wird, d.h. sowohl über den Spalt als auch über die hohle Reckstange, ergibt sich der besondere Vorteil eines erhöhten Strömungsquerschnitts und somit insbesondere im Falle des Füllgutes eines erhöhten maximal erreichbaren Volumenstroms.

Vorteilhafterweise verbleibt wenigstens ein Teil des während der Vorblasphase zugeführten Blasgases bis zum Abschluss der Hauptblasphase im Behälter. Dabei wird das Blasgas weiter komprimiert, weil das Füllgut erfindungsgemäß unter einem höheren Druck bereitgestellt wird.

Durch den Verbleib von Blasgas bis zur vollständigen Ausformung des Behälters wird insbesondere die Zykluszeit minimiert, weil sich die Hauptblasphase ohne zwischengeschaltete Druckentlastung der sich entwickelnden Behälterblase direkt an die Vorblasphase anschließen kann. Ein weiterer Vorteil besteht darin, dass der Behälter einen gasgefüllten Kopfraum aufweist und so das Auslaufen von Füllgut bei der weiteren Handhabung des fertigen, gefüllten Behälters reduziert wird.

Eine vorteilhafte Weiterbildung der Erfindung ist dadurch gekennzeichnet, dass das Blasgas einen vorgebbaren Anteil an Kohlenstoffdioxid enthält. Dies führt in der Hauptblasphase zu einer Karbonisierung des Füllgutes, indem Kohlenstoffdioxid (CO₂) aus dem Blasgas unter Druck im Füllgut gelöst wird. Der Karbonisierungsgrad, insbesondere die Menge an im Füllgut gelöstem CO₂, ist dabei über den vorgebbaren Anteil des CO₂ im Blasgas beeinflussbar, wobei ein höherer Anteil von CO₂ im Blasgas auch einen höheren Karbonisierungsgrad zur Folge hat.

Vorteilhafterweise wird der Behälter nach Abschluss der Hauptblasphase verschlossen, wobei der Behälter insbesondere erst verschlossen aus der Blasform entnommen wird. Dadurch wird die Handhabung des gefüllten Behälters, insbesondere die Entnahme aus der Blasform und die anschließende Abförderung, wesentlich vereinfacht, weil insbesondere keine bei der Handhabung offener Behälter stets möglichen Füllgutverluste auftreten können.

Die der Erfindung zugrundeliegende Aufgabe wird ferner gelöst durch eine Einrichtung zur Herstellung eines mit einem flüssigen Füllgut gefüllten Behälters umfassend eine Heizvorrichtung zur thermischen Konditionierung von Vorformlingen aus einem thermoplastischen Material und umfassend eine Blasvorrichtung zum Umformen jeweils eines thermisch konditionierten Vorformlings in einen Behälter, wobei die Blasvorrichtung eine Blasform zur Aufnahme eines Vorformlings, eine Reckstange zum Recken des in der Blasform befindlichen Vorformlings sowie Zuführmittel zum Einleiten von Blasfluiden in einen inneren Hohlraum des in der Blasform befindlichen Vorformlings aufweist, wobei die erfindungsgemäße Einrichtung dadurch weitergebildet ist, dass die Zuführmittel eine erste Zuleitung, die ausgelegt ist zum Zuführen eines Gases, und eine zweite Zuleitung, die ausgelegt ist zum Zuführen einer Flüssigkeit, umfasst.

Die erfindungsgemäße Einrichtung ist insbesondere dazu geeignet und eingerichtet, ein zuvor beschriebenes Verfahren gemäß der Erfindung auszuführen.

Vorteilhafterweise umfasst die Blasvorrichtung eine Blasdüse zum Abdichten eines in der Blasform befindlichen Vorformlings, insbesondere zum Abdichten eines inneren Hohlraums des Vorformlings, wobei mittels der Blasdüse der innere Hohlraum des Vorformlings mit der ersten Zuleitung und/oder der zweiten Zuleitung strömungsleitend verbindbar oder verbunden ist.

Hierzu wird beispielsweise die Blasdüse auf den Mündungsbereich eines in der Blasform befindlichen Vorformlings aufgesetzt. Für den Fall, dass der Vorformling mittels eines Transportdorns transportiert wird, so greift die Blasdüse vorzugsweise am Transportdorn an, wobei der Transportdorn über einen Kanal zum Zuleiten des mittels der Blasdüse bereitgestellten Fluids in den Vorformling bzw. die sich entwickelnde Behälterblase verfügt.

Bei einer weiteren Ausführungsform der Erfindung ist die Reckstange hohl ausgebildet, wobei mittels der Reckstange ein innerer Hohlraum eines in der Blasform befindlichen Vorformlings mit der ersten Zuleitung und/oder der zweiten Zuleitung strömungsleitend verbindbar oder verbunden ist.

Eine besonders bevorzugte Weiterbildung der Erfindung ist dadurch ausgezeichnet, dass die Einrichtung ferner umfasst ein Umschaltventil, an dass eingangsseitig die erste Zuleitung und die zweite Zuleitung sowie ausgangsseitig eine dritte Zuleitung angeschlossen sind, wobei die dritte Zuleitung sowohl zum Zuleiten von Gasen als auch zum Zuleiten von Flüssigkeiten ausgebildet ist und wobei ein innerer Hohlraum eines in der Blasform befindlichen Vorformlings, insbesondere mittels der Blasdüse und/oder mittels der hohlen Reckstange, mit der dritten Zuleitung strömungsleitend verbindbar oder verbunden ist. Hierdurch wird insbesondere ermöglicht, über einen Einleitweg, beispielsweise eine Blasdüse oder eine hohle Reckstange, wechselnd Gas und Flüssigkeit in einen Vorformling bzw. die sich daraus entwickelnde Behälterblase einzuleiten.

Des Weiteren bevorzugt im Rahmen der Erfindung ist es, wenn die Einrichtung ferner strömungsleitend mit der ersten Zuleitung verbundene Bereitstellungsmittel zum Bereitstellen eines Blasgases umfasst, wobei die Bereitstellungsmittel eine Mischvorrichtung zum Bereitstellung einer Gasmischung von Gasen aus wenigstens zwei unterschiedlichen Gasquellen aufweisen.

Außerdem bevorzugt ist es, wenn die Einrichtung ferner eine Verschließvorrichtung zum Verschließen eines mit Füllgut gefüllten Behälters, insbesondere zum Verschließen eines sich in der Blasform befindlichen Behälters, umfasst.

Eine erfindungsgemäße Einrichtung kann auch mehrere, vorzugsweise gleichartige, Blasvorrichtungen aufweisen, die beispielsweise auf einem rotierenden Blasrad angeordnet sind. Mehrere Blasvorrichtungen können dabei im Rahmen der Erfindung einzelne Merkmale auch teilen, beispielsweise eine gemeinsame Zuleitungen zum Zuführen von Gas und/oder Flüssigkeit zu einer Mehrzahl an Blasvorrichtungen.

In den Zeichnungen sind Ausführungsbeispiele der Erfindung schematisch dargestellt. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: schematisch die Herstellung eines Behälters gemäß einer Ausführungsform der Erfindung,
- Fig. 6: schematisch die Herstellung eines Behälters gemäß einer weiteren Ausführungsform der Erfindung,
- Fig. 7: schematisch die Herstellung eines Behälters gemäß einer weiteren Ausführungsform der Erfindung, und
- Fig. 8: schematisch die Herstellung eines Behälters gemäß einer weiteren Ausführungsform der Erfindung.

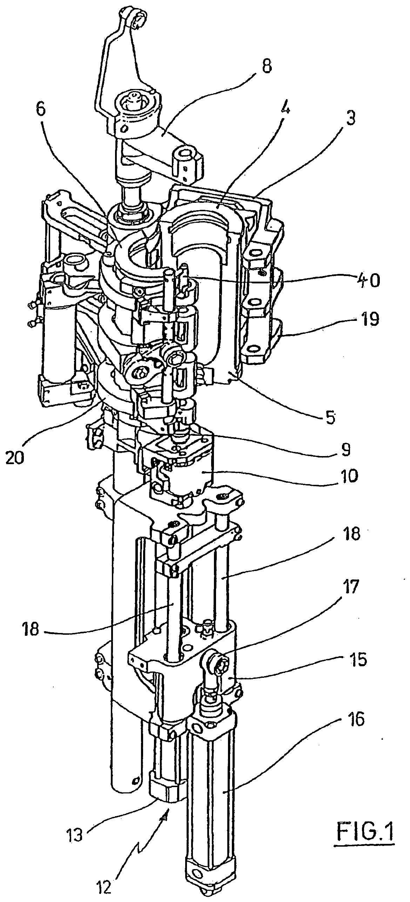

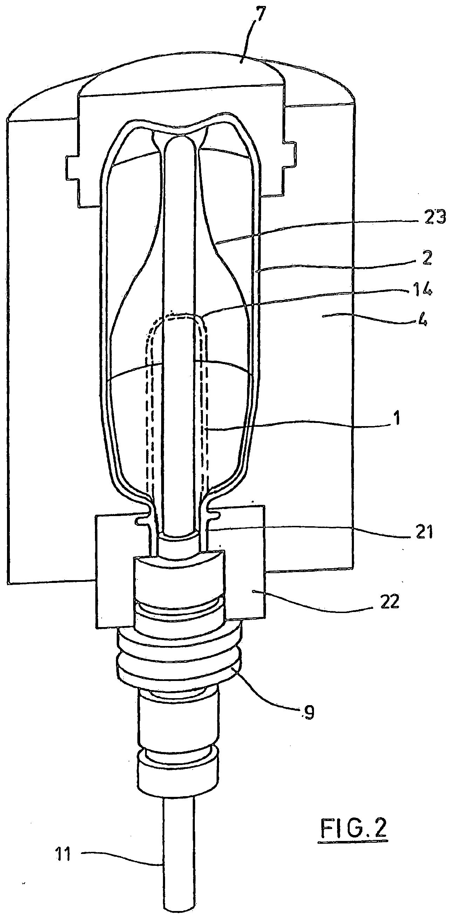

Der prinzipielle Aufbau einer erfindungsgemäßen Einrichtung zur Herstellung von einem mit einem flüssigen Füllgut gefüllten Behälter (2) aus einem Vorformling (1) ist in Fig. 1 und in Fig. 2 dargestellt. Die Anordnung kann dabei wie dargestellt oder in einer vertikalen Ebene um 180° gedreht erfolgen.

Die Vorrichtung zur Herstellung des Behälters (2) besteht im Wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, dass eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

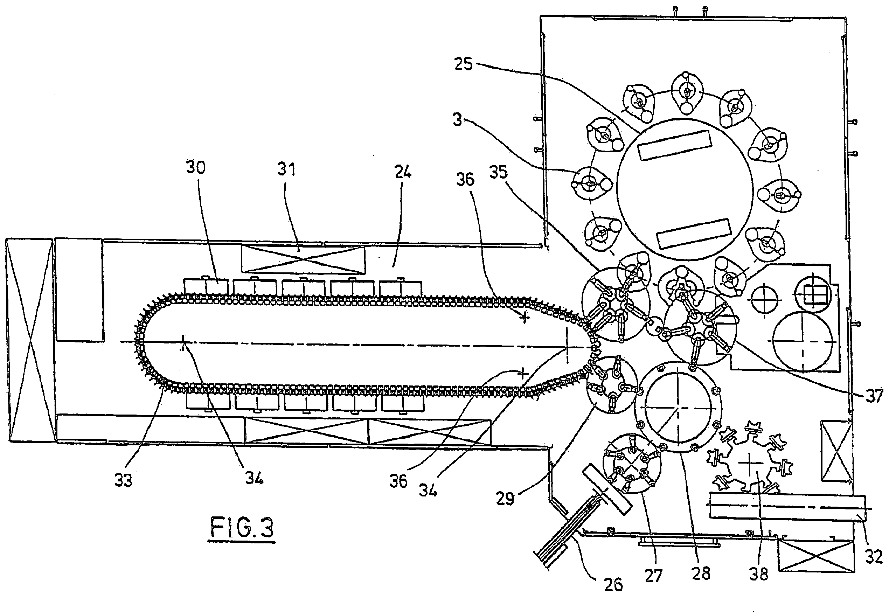

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise Polyethylenterephthalat (PET), Polyethylennaphthalat (PEN) oder Polypropylen (PP).

Die Expansion des Vorformlings (1) während des Orientierungsvorganges erfolgt durch Fluidzuführung. Die Fluidzuführung ist in eine Vorblasphase, in der Gas, zum Beispiel Pressluft, mit einem niedrigen Druckniveau zugeführt wird und in eine sich anschließende Hauptblasphase unterteilt, in der flüssiges Füllgut, beispielsweise Trinkwasser, mit einem höheren Druckniveau zugeführt wird. Während der Vorblasphase wird typischerweise Druckluft mit einem Druck im Intervall von 10 bar bis 25 bar verwendet, wobei die Vorblasphase bereits beendet wird, wenn der Druck in der sich entwickelnden Behälterblase auf 2 bar bis 5 bar angestiegen ist.

Aus Fig. 3 ist ebenfalls erkennbar, dass bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

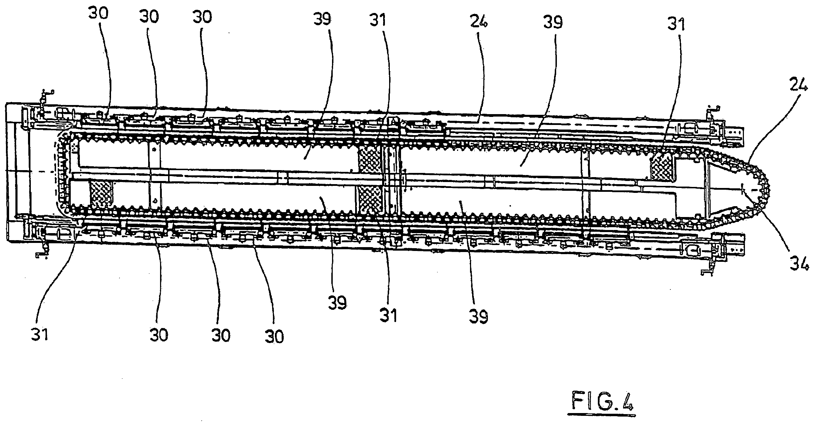

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

Ein Transport der Vorformlinge (1) und der Behälter (2) durch die Blasmaschine kann in unterschiedlicher Art und Weise erfolgen. Gemäß einer Ausführungsvariante werden die Vorformlinge (1) zumindest entlang des wesentlichen Teiles ihres Transportweges von Transportdornen getragen. Es ist aber auch möglich, einen Transport der Vorformlinge (1) unter Verwendung von Zangen durchzuführen, die außenseitig am Vorformling (1) angreifen, oder Innendorne zu verwenden, die in einen Mündungsbereich des Vorformlings (1) eingeführt werden. Ebenfalls sind hinsichtlich der räumlichen Orientierung der Vorformlinge (1) unterschiedliche Varianten denkbar.

Gemäß einer Variante wird der Vorformling (1) im Bereich der Vorformlingseingabe (26) mit seiner Mündung in lotrechter Richtung nach oben orientiert zugeführt, anschließend gedreht, entlang der Heizstrecke (24) und des Blasrades (25) mit seiner Mündung in lotrechter Richtung nach unten orientiert gefördert und als geblasener und gefüllter Behälter (2) vor einem Erreichen der Ausgabestrecke (32) wieder gedreht. Entsprechende Transportmittel, beispielsweise Transportdorne, weisen dabei entsprechende Dichteinrichtungen auf, um sicherzustellen, dass das während des Blasvorgangs eingebrachte Füllgut im Behälter (2) verbleibt.

Gemäß einer anderen Variante wird der Vorformling (1) im Bereich der Heizstrecke (24) mit seiner Mündung in lotrechter Richtung nach unten orientiert beheizt, vor Erreichen des Blasrades (25) jedoch wieder um 180° gedreht.

Gemäß einer dritten Ausführungsvariante durchläuft der Vorformling (1) bzw. der Behälter (2) den gesamten Bereich der Blasmaschine ohne Durchführung von Wendevorgängen mit seiner Mündung in lotrechter Richtung nach oben orientiert.

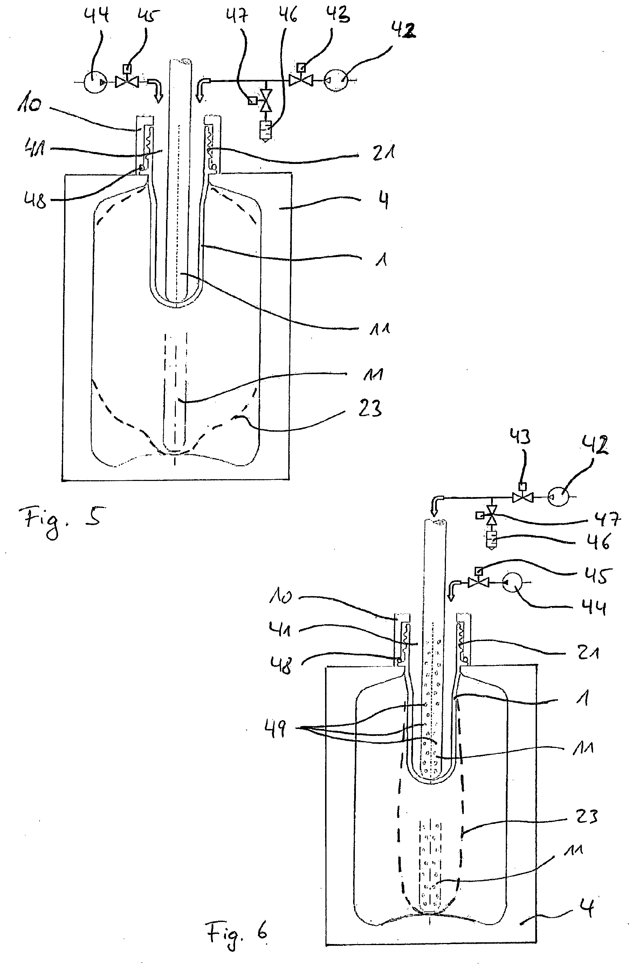

Anhand der Figuren 5 bis 8 wird im Folgenden die erfindungsgemäße Herstellung eines mit einem flüssigen Füllgut gefüllten Behälters erläutert.

Fig. 5 zeigt eine Blasform (4), in der sich ein Vorformling (1) befindet. Der Vorformling (1) ist dabei beispielsweise mit seinem Mündungsabschnitt (21) nach oben weisend in der Blasform (4) angeordnet. Über den Mündungsabschnitt (21) ist ein Anschlusskolben (10), der auch als Blasdüse bezeichnet wird, angeordnet, der den Vorformling (1) mittels einer Dichtung (48) abdichtet. Die Blasdüse (10) definiert einen Spalt (41), über den Blasfluide in den Vorformling (1) eingeleitet werden. Durch den Spalt (41) hindurch ist eine Reckstange (11) geführt, so dass der Spalt (41) in Abhängigkeit von der Position der Reckstange (11) einen kreis- oder einen ringförmigen Querschnitt annimmt.

Mit der Blasdüse (10) bzw. dem Spalt (41) ist eine Druckluftführung verbunden oder verbindbar, die eine Druckluftquelle (42) und ein Druckluftventil (43) umfasst. In einer Vorblasphase wird Druckluft aus der Druckluftquelle (42), gesteuert durch das Druckluftventil (43), in den Vorformling (1) eingeleitet. Gleichzeitig wird der Vorformling (1) mittels der Reckstange (11), die an einer Kuppe des Vorformlings (1) anliegt, längsaxial, d.h. entlang einer Längsachse des Vorformlings (1), gereckt.

Unter Einwirkung der Druckluft und der Reckstange (11) entwickelt sich eine Behälterblase (23), die zum Ende der Vorblasphase beispielsweise bereits bereichsweise an der Blasform (4) anliegt. Zu diesem Zeitpunkt, zu dem auch der Reckvorgang abgeschlossen und die Reckstange entsprechend am Boden der Blasform (4) angelangt ist, ist die Behälterblase (23) beispielhaft als gestrichelte Linie in Fig. 5 dargestellt.

In einer sich der Vorblasphase anschließenden Hauptblasphase wird flüssiges Füllgut, beispielsweise Trinkwasser, aus einer Füllgutquelle (44) unter Druck und gesteuert durch ein Füllgutventil (45), in die Behälterblase (23) eingeleitet. Dabei ist der Druck des bereitgestellten Füllgutes größer als der Innendruck in der Behälterblase (23), so dass die Behälterblase (23) weiter expandiert wird, bis sie überall an der Blasform (4) anliegt. Dabei steigt der Druck innerhalb der Behälterblase (23) weiter, wobei der Druckanstieg beispielsweise durch gezielte Steuerung eines Exhaustventils (47) und entsprechendes Ablassen eines Teils des Blasgases aus der Behälterblase (23) über einen Exhaust (46) beeinflusst werden kann. Die Hauptblasphase kann jedoch auch ohne Ablassen von Blasgas erfolgen, um beispielsweise einen möglichst schnellen Druckanstieg innerhalb der Behälterblase (23) zu erreichen.

Die in Fig. 5 dargestellte Anordnung der Ventile (43, 45, 47) ist ausdrücklich als exemplarisch zu verstehen. Alternative Lösungen sind ausdrücklich auch von der Erfindung umfasst. Beispielsweise ist es denkbar, Druckluftspeicher (42) und Exhaust (46) mittels eines einzelnen Ventils, das beispielsweise als Umschaltventil ausgebildet ist, zu kontrollieren. Ebenso ist es beispielsweise denkbar, die Zuleitung von Druckluft aus dem Druckluftspeicher (42) und von Füllgut aus dem Füllgutspeicher (44) über ein einzelnes Ventil zu kontrollieren.

Nach Ausformen der Behälterblase (23) ist der Behälter (2) fertiggestellt und kann nach Druckentlastung über den Exhaust (46) als gefüllter Behälter der Blasform (4) entnommen werden. Vorteilhafterweise wird der Behälter (2) vor der Entnahme verschlossen, um beispielsweise ein Herauslaufen oder Herausschwappen von Füllgut aus dem Behälter (2) bei der Entnahme zu vermeiden.

Eine weitere Ausführungsform der Erfindung ist in Fig. 6 dargestellt. In diesem Fall ist die Reckstange (11) hohl ausgebildet und verfügt über mehrere Auslassöffnungen (49), die im unteren Bereich der Reckstange (11) in den Vorformling (1) münden. Dadurch wird ermöglicht, die Blasfluide auch über die Reckstange (11) in den Vorformling (1) einzuleiten.

In dem in Fig. 6 dargestellten Beispiel ist dies lediglich das Blasgas, während das Füllgut wie bereits zu Fig. 5 beschrieben über den Spalt (41) der Blasdüse (10) in den Vorformling (1) bzw. in die sich entwickelnde Behälterblase (23) gelangt. Hierdurch wird vorteilhafterweise erreicht, dass die beiden Blasfluide, d.h. das Blasgas einerseits und das Füllgut anderseits, über komplett getrennt Leitungswege oder Zuleitungen in den Vorformling (1) eingeleitet werden können. Ein Vermischen der Blasfluide in den Zuleitungen wird dadurch ausgeschlossen.

Unabhängig von der Variation in den Zuleitungen der Blasfluide zeigt Fig. 6 zudem eine vorteilhafte Variante des erfindungsgemäßen Verfahrens. Dabei wird der Vorformling (1) während der Vorblasphase zwar in gesamter längsaxialer Ausdehnung gereckt, jedoch durch entsprechend geringe Zufuhr von Blasgas nur sehr wenig radial oder queraxial expandiert. Dadurch wird verhindert, dass das Material der sich entwickelnden Behälterblase (23) an der Reckstange (11) zur Anlage kommt, das Volumen der Behälterblase (23) bleibt jedoch am Ende der Vorblasphase möglichst gering. Hierdurch wird erreicht, dass das Material aus dem Vorformling (1) bereits kontrolliert entlang der Längsachse verteilt wird und dennoch zu Beginn der Hauptblasphase ein schnelles Anfüllen der Behälterblase (23) mit dem inkompressiblen Füllgut und damit ein schneller Druckanstieg innerhalb der Behälterblase (23) erreicht wird. So wird eine gute Materialverteilung kombiniert mit einem schnellen Hauptblasvorgang kombiniert, was insbesondere im Hinblick auf die Abkühlung des Materials bei Kontakt mit dem Füllgut vorteilhaft ist.

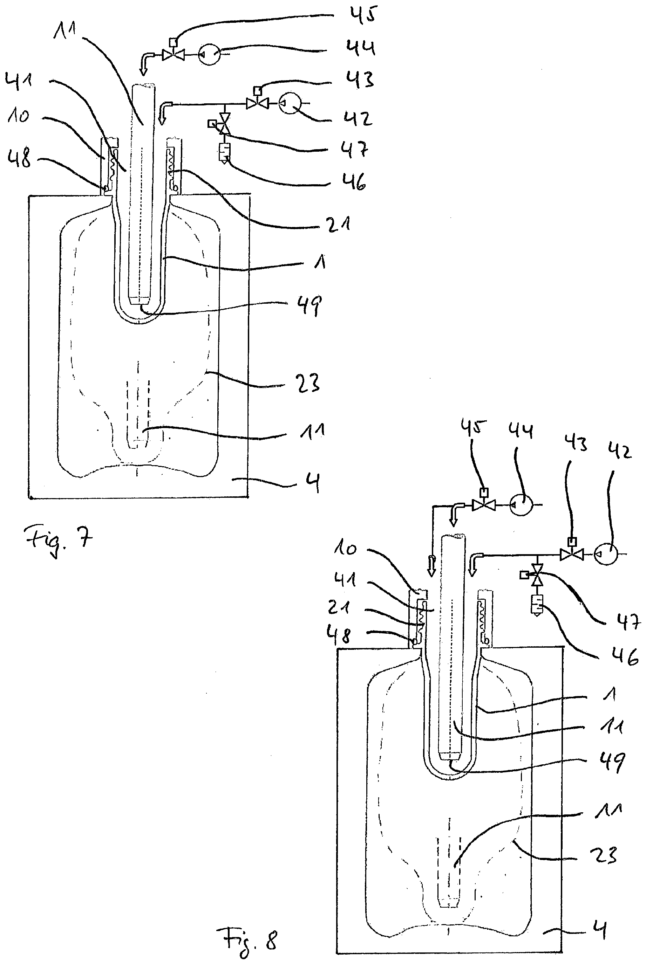

Eine weitere Variante der Erfindung ist in Fig. 7 dargestellt. Diese Variante unterscheidet sich von der in Fig. 6 dargestellten Variante hauptsächlich dadurch, dass das Blasgas über die Blasdüse (10) und das Füllgut über die hohle Reckstange (11) zugeführt wird. Außerdem verfügt die hohle Reckstange (11) über eine einzelne, nach unten Richtung Behälterboden gerichtete Austrittsöffnung (49). Diese Ausführungsform der hohlen Reckstange (11) ist strömungsdynamisch vorteilhaft für inkompressible Fluide wie das Füllgut, macht es jedoch erforderlich, dass die Reckstange (11) nach Beendigung des Reckvorganges und vor Beginn der Hauptblasphase zumindest leicht angehoben wird, um ein Ausströmen des Füllgutes zu ermöglichen.

Die gezeigten Ausführungen der hohlen Reckstange (11) sind grundsätzlich exemplarisch zu verstehen. Prinzipiell ist auch eine Kombination von seitlichen Ausströmöffnungen (49) mit einer zentralen Ausströmöffnung (49) an der Reckstangenspitze denkbar. Zudem können im Rahmen der Erfindung beliebige Ausgestaltungen einer hohlen Reckstange sowohl zum Einleiten eines Blasgases als auch zum Einleiten eines Füllgutes verwendet werden.

Eine vierte Ausführungsform der Erfindung ist in Fig. 8 dargestellt, wobei in diesem Fall das Füllgut sowohl über die Blasdüse (10) als auch über die hohle Reckstange (11) zugeführt bzw. eingeleitet wird. Dadurch wird der zum Einleiten des Füllgutes zur Verfügung stehende Querschnitt oder Leitungsquerschnitt vergrößert, so dass ein erhöhter Volumenstrom für das Füllgut realisierbar wird.

Dies kann beispielsweise auch dadurch erreicht werden, dass die Reckstange (11) nach Beendigung des Reckvorganges zurückgezogen wird, so dass die Querschnittsfläche des Spaltes (41) in der Blasdüse (10) erhöht wird. Es sind auch beide Varianten kombinierbar, wobei beispielsweise Füllgut durch die hohle Reckstange (11) und die Blasdüse (10) eingeleitet wird, parallel jedoch die Reckstange (11) verfahren wird, um den Spalt (41) in der Blasdüse (10) zu vergrößern.

## Patentansprüche

1. Verfahren zum Herstellen eines mit einem flüssigen Füllgut gefüllten Behälters (2), bei dem ein Vorformling (1) aus einem thermoplastischen Material nach einem thermischen Konditionieren mittels einer Reckstange (11) gereckt und in einem Aufblasprozess in den Behälter (2) umgeformt wird, wobei der Aufblasprozess umfasst eine Vorblasphase, in der ein Fluid eines ersten Druckniveaus zum Aufblasen verwendet wird, und eine Hauptblasphase, in der ein Fluid eines zweiten Druckniveaus, das höher ist als das erste Druckniveau, zum Aufblasen verwendet wird, wobei das in der Vorblasphase verwendete Fluid ein Blasgas ist, und dass das in der Hauptblasphase verwendete Fluid das Füllgut ist, **dadurch gekennzeichnet, dass** wenigstens ein Teil des während der Vorblasphase zugeführten Blasgases bis zum Abschluss der Hauptblasphase im Behälter (2) verbleibt und wobei das Blasgas einen vorgebbaren Anteil an Kohlenstoffdioxid enthält.

2. Verfahren nach Anspruch 1, **dadurch gekennzeichnet, dass** das Blasgas durch einen Spalt (41) im Bereich eines Mündungsabschnitts (21) des Vorformlings (1) bzw. der sich entwickelnden Behälterblase (23) und/oder einen inneren Hohlraum der Reckstange (11) in einen inneren Hohlraum des Vorformlings (1) bzw. der sich entwickelnden Behälterblase (23) eingeleitet wird.

3. Verfahren nach Anspruch 1 oder 2, **dadurch gekennzeichnet, dass** das Füllgut durch einen Spalt (41) im Bereich eines Mündungsabschnitts (21) des Vorformlings (1) bzw. der sich entwickelnden Behälterblase (23) und/oder einen inneren Hohlraum der Reckstange (11) in einen inneren Hohlraum des Vorformlings (1) bzw. der sich entwickelnden Behälterblase (23) eingeleitet wird.

4. Verfahren nach einem der Ansprüche 1 bis 3, **dadurch gekennzeichnet, dass** der Behälter (2) nach Abschluss der Hauptblasphase verschlossen wird, wobei der Behälter (2) insbesondere erst verschlossen aus der Blasform entnommen wird.

5. Einrichtung zur Herstellung eines mit einem flüssigen Füllgut gefüllten Behälters (2) umfassend eine Heizvorrichtung (24) zur thermischen Konditionierung von Vorformlingen (1) aus einem thermoplastischen Material und umfassend eine Blasvorrichtung (3) zum Umformen jeweils eines thermisch konditionierten Vorformlings (1) in einen Behälter (2), wobei die Blasvorrichtung (3) eine Blasform (4) zur Aufnahme eines Vorformlings (1), eine Reckstange (11) zum Recken des in der Blasform (4) befindlichen Vorformlings (1) sowie Zuführmittel zum Einleiten von Blasfluiden in einen inneren Hohlraum des in der Blasform (4) befindlichen Vorformlings (1) aufweist, wobei die Zuführmittel eine erste Zuleitung, die ausgelegt ist zum Zuführen eines Gases, und eine zweite Zuleitung, die ausgelegt ist zum Zuführen einer Flüssigkeit, umfasst, **dadurch gekennzeichnet, dass** die Einrichtung ferner strömungsleitend mit der ersten Zuleitung verbundene Bereitstellungsmittel umfasst zum Bereitstellen eines Blasgases, wobei die Bereitstellungsmittel eine Mischvorrichtung zum Bereitstellung einer Gasmischung von Gasen aus wenigstens zwei unterschiedlichen Gasquellen aufweisen.

6. Einrichtung nach Anspruch 5, **dadurch gekennzeichnet, dass** die Blasvorrichtung (3) eine Blasdüse (10) zum Abdichten eines in der Blasform (4) befindlichen Vorformlings (1), insbesondere zum Abdichten eines inneren Hohlraums des Vorformlings (1), umfasst, wobei mittels der Blasdüse (10) der innere Hohlraum des Vorformlings (1) mit der ersten Zuleitung und/oder der zweiten Zuleitung strömungsleitend verbindbar oder verbunden ist.

7. Einrichtung nach Anspruch 5 oder 6, **dadurch gekennzeichnet, dass** die Reckstange (11) hohl ausgebildet ist, wobei mittels der Reckstange (11) ein innerer Hohlraum eines in der Blasform (4) befindlichen Vorformlings (1) mit der ersten Zuleitung und/oder der zweiten Zuleitung strömungsleitend verbindbar oder verbunden ist.

8. Einrichtung nach einem der Ansprüche 5 bis 7, **dadurch gekennzeichnet, dass** die Einrichtung ferner umfasst ein Umschaltventil, an dass eingangsseitig die erste Zuleitung und die zweite Zuleitung sowie ausgangsseitig eine dritte Zuleitung angeschlossen sind, wobei die dritte Zuleitung sowohl zum Zuleiten von Gasen als auch zum Zuleiten von Flüssigkeiten ausgebildet ist und wobei ein innerer Hohlraum eines in der Blasform (4) befindlichen Vorformlings (1), insbesondere mittels der Blasdüse (10) und/oder mittels der hohlen Reckstange (11), mit der dritten Zuleitung strömungsleitend verbindbar oder verbunden ist.

9. Einrichtung nach einem der Ansprüche 5 bis 8, **dadurch gekennzeichnet, dass** die Einrichtung ferner umfasst eine Verschließvorrichtung zum Verschließen eines mit Füllgut gefüllten Behälters (2), insbesondere zum Verschließen eines sich in der Blasform (4) befindlichen Behälters (2).

## Claims

1. A method for the production of a container (2) filled with liquid filling product, in which a preform (1) made of thermoplastic material is stretched by means of a stretch forming bar (11) after having been thermally conditioned and is moulded to obtain the container (2) in an inflation process, wherein the inflation process comprises a preliminary blowing phase in which a fluid of a first pressure level is used for inflation and a main blowing phase in which a fluid of a second pressure level, which is higher than the first pressure level, is used for inflation, wherein the fluid used in the preliminary blowing phase is a blowing gas and the fluid used in the main blowing phase is the filling product,
**characterised in that**
- at least a part of the blowing gas supplied in the preliminary blowing phase remains in the container (2) until the main blowing phase is completed, and wherein the blowing gas contains a predefinable amount of carbon dioxide.

2. The method according to Claim 1, **characterised in that** the blowing gas is introduced into an inner cavity of the preform (1) or the developing container bubble (23), respectively, through a gap (41) in the region of an outlet section (21) of the preform (1) or the developing container bubble (23), respectively, and/or an inner cavity of the stretch forming bar (11).

3. The method according to Claim 1 or 2, **characterised in that** the filling product is introduced into an inner cavity of the preform (1) or the developing container bubble (23), respectively, through a gap (41) in the region of an outlet section (21) of the preform (1) or the developing container bubble (23), respectively, and/or an inner cavity of the stretch forming bar (11).

4. The method according to any one of Claims 1 to 3, **characterised in that** the container (2) is closed after completion of the main blowing phase, particularly wherein the container (2) is not taken out of the blow mould before it is closed.

5. A device for the production of a container (2) filled with liquid filling product, comprising a heater (24) for thermally conditioning preforms (1) made of thermoplastic material, and comprising a blowing device (3) for moulding one thermally conditioned preform (1) each to obtain a container (2), wherein the blowing device (3) has a blow mould (4) for receiving a preform (1), a stretch forming bar (11) for stretching the preform (1) positioned in the blow mould (4), as well as supply means for introducing blowing fluids into an inner cavity of the preform (1) positioned in the blow mould (4), wherein the supply means comprise a first feed line configured to supply a gas and a second feed line configured to supply a liquid, **characterised in that** the device further comprises provision means for providing a blowing gas, said provision means being connected to the first feed line in a flow-conducting manner, wherein the provision means have a mixing device for providing a gas mixture of gases from at least two different gas sources.

6. The device according to Claim 5, **characterised in that** the blowing device (3) comprises a blowing nozzle (10) for sealing a preform (1) positioned in the blow mould (4), more particularly for sealing an inner cavity of the preform (1), wherein the inner cavity of the preform (1) is connectable or connected to the first feed line and/or the second feed line in a flow-conducting manner by means of the blowing nozzle (10).

7. The device according to Claim 5 or 6, **characterised in that** the stretch forming bar (11) is formed hollow, wherein an inner cavity of a preform (1) positioned in the blow mould (4) is connectable or connected to the first feed line and/or the second feed line in a flow-conducting manner by means of the stretch forming bar (11).

8. The device according to any one of Claims 5 to 7, **characterised in that** the device further comprises a switching valve, with the first feed line and the second feed line being connected to said switching valve on the input side and a third feed line being connected to said switching valve on the output side, wherein the third feed line is configured to supply gases as well as to supply liquids, and wherein an inner cavity of a preform (1) positioned in the blow mould (4) is connectable or connected to the third feed line in a flow-conducting manner particularly by means of the blowing nozzle (10) and/or by means of the hollow stretch forming bar (11).

9. The device according to any one of Claims 5 to 8, **characterised in that** the device further comprises a closing device for closing a container (2) filled with filling product, more particularly for closing a container (2) positioned in the blow mould (4).

## Revendications

1. Procédé de fabrication d'un récipient (2) rempli d'un produit de remplissage liquide dans le cadre duquel une préforme (1) en un matériau thermoplastique est, après un conditionnement thermique, étirée au moyen d'une barre d'étirage (11) et transformé par un processus de soufflage en récipient (2), le processus de soufflage comportant une phase de pré-soufflage qui met en oeuvre un fluide de soufflage à un premier niveau de pression et une phase de soufflage principal lors de laquelle est utilisé un fluide de soufflage à un second niveau de pression supérieur au premier niveau de pression, le fluide utilisé lors de la phase de pré-soufflage étant un gaz de soufflage et le fluide utilisé pendant la phase de soufflage principal étant le produit de remplissage, **caractérisé en ce qu'**une partie au moins du gaz de soufflage introduit pendant la phase de pré-soufflage reste dans le récipient (2) jusqu'à la fin de la phase de soufflage principal, le gaz de soufflage contenant une part prédéfinissable de dioxyde de carbone.

2. Procédé selon la revendication 1, **caractérisé en ce que** le gaz de soufflage est introduit par une fente (41) au niveau d'une section d'embouchure (21) de la préforme (1) ou de la bulle (23) qui évolue progressivement pour former le récipient et/ou par une cavité intérieure de la barre d'étirage (11) dans une cavité intérieure de la préforme (1) ou de ladite bulle (23).

3. Procédé selon la revendication 1 ou 2, **caractérisé en ce que** le produit de remplissage est introduit par une fente (41) au niveau d'une section d'embouchure (21) de la préforme (1) ou de la bulle (23) qui évolue progressivement pour former le récipient et/ou par une cavité intérieure de la barre d'étirage (11) dans une cavité intérieure de la préforme (1) ou de ladite bulle (23).

4. Procédé selon l'une des revendications 1 à 3, **caractérisé en ce que** le récipient (2) est obturé à la fin de la phase de soufflage principal, le récipient (2) n'étant notamment retiré du moule de soufflage qu'après son obturation.

5. Dispositif de fabrication d'un récipient (2) rempli d'un produit de remplissage liquide comportant un dispositif de chauffage (24) pour le conditionnement thermique de préformes (1) en un matériau thermoplastique et comportant un dispositif de soufflage (3) pour transformer chaque préforme thermiquement conditionnée (1) en un récipient (2), le dispositif de soufflage (3) présentant un moule de soufflage (4) dans lequel vient se loger une préforme (1), une barre d'étirage (11) pour étirer la préforme (1) se trouvant dans le moule de soufflage (4) ainsi que des moyens d'adduction de fluides de soufflage dans une cavité intérieure de la préforme (1) se trouvant dans le moule de soufflage (4), les moyens d'adduction comprenant une première conduite d'amenée conçue pour l'adduction d'un gaz et une seconde conduite d'amenée conçue pour l'adduction d'un liquide, **caractérisé en ce que** le dispositif présente en outre, pour l'approvisionnement en gaz de soufflage, des moyens d'approvisionnement raccordés de manière à conduire le courant à la première conduite d'amenée, les moyens d'approvisionnement présentant un dispositif mélangeur pour l'approvisionnement avec un mélange de gaz provenant d'au moins deux sources de gaz différentes.

6. Dispositif selon la revendication 5, **caractérisé en ce que** le dispositif de soufflage (3) présente une buse de soufflage (10) pour étanchéifier une préforme (1) logée dans le moule de soufflage (4), notamment pour étanchéifier une cavité intérieure de la préforme (1), cette cavité intérieure de la préforme (1) étant ou pouvant être, au moyen de la buse de soufflage (10), raccordée de manière à conduire le courant à la première conduite d'amenée et/ou à la seconde conduite d'amenée.

7. Dispositif selon la revendication 5 ou 6, **caractérisé en ce que** la barre d'étirage (11) est de conformation creuse, une cavité intérieure de la préforme (1) logée dans le moule de soufflage (4) étant ou pouvant être, au moyen de la barre d'étirage (11), raccordée de manière à conduire le courant à la première conduite d'amenée et/ou à la seconde conduite d'amenée.

8. Dispositif selon l'une des revendications 5 à 7, **caractérisé en ce que** le dispositif comprend en outre une vanne d'inversion sur laquelle sont branchées du côté entrée la première conduite d'amenée et la seconde conduite d'amenée et du côté sortie une troisième conduite d'amenée, la troisième conduite d'amenée étant conçue aussi bien pour l'adduction de gaz que de liquides et une cavité intérieure d'une préforme (1) logée dans le moule de soufflage (4) étant ou pouvant être raccordée de manière à conduire le courant à la troisième conduite d'amenée, notamment au moyen de la buse de soufflage (10) et/ou au moyen de la barre d'étirage creuse (11).

9. Dispositif selon l'une des revendications 5 à 8, **caractérisé en ce que** le dispositif comprend en outre un dispositif d'obturation pour obturer un récipient (2) contenant un produit de remplissage, notamment pour obturer un récipient (2) se trouvant dans le moule de soufflage (4).
